Europäisches Patentamt

European Patent Office

Office européen des brevets

(11) Veröffentlichungsnummer: **0 223 302 B1**

# EUROPÄISCHE PATENTSCHRIFT

(45) Veröffentlichungstag der Patentschrift: **03.04.91**

(51) Int. Cl.⁵: **A01D 34/66, A01D 34/74**

(21) Anmeldenummer: **86201975.9**

(22) Anmeldetag: **12.11.86**

(54) **Mähvorrichtung.**

(30) Priorität: **15.11.85 NL 8503156**

(43) Veröffentlichungstag der Anmeldung:
**27.05.87 Patentblatt 87/22**

(45) Bekanntmachung des Hinweises auf die
Patenterteilung:
**03.04.91 Patentblatt 91/14**

(84) Benannte Vertragsstaaten:
**DE FR GB IT NL SE**

(56) Entgegenhaltungen:
FR-A- 2 047 231          FR-A- 2 323 312
FR-A- 2 332 694          US-A- 2 697 319
US-A- 3 212 588          US-A- 3 751 889
US-A- 3 893 283          US-A- 3 893 283

(73) Patentinhaber: **P.J. Zweegers en Zonen Landbouwmachinefabriek B.V.
Nuenenseweg 165
NL-5667 KP Geldrop(NL)**

(72) Erfinder: **Quataert, Petrus M.
Berg 73
NL-5671 CB Nuenen(NL)**

(74) Vertreter: **Noz, Franciscus Xaverius, Ir. et al
Algemeen Octrooibureau P.O. Box 645
NL-5600 AP Eindhoven(NL)**

## Beschreibung

Die Erfindung bezieht sich auf eine Mähvorrichtung, mit einem Laufräder aufweisenden Fahrgestell, welches mit Hilfe eines Zugarmes, der dem Fahrgestell gegenüber drehbar ist um eine sich aufwärts erstreckende Drehachse, an ein Fahrzeug gekuppelt werden kann, und mit mehreren mit Messern versehenen Mähorganen, welche quer zur Fahrtrichtung nebeneinander angeordnet sind, und um sich aufwärts erstreckende Drehachsen drehbar sind, und welche im Betrieb wenigstens teilweise von mindestens zwei in der Nähe der äusseren Mähorgane angeordneten Kufen unterstützt werden, die hinter den in Fahrtrichtung vordersten Stellen der von den Messern der Mähorgane beschriebenen Umfangskreise den Boden berühren, während der Teil des Fahrgestells, welcher die Mähorgane unterstützt, den Laufrädern gegenüber federnd ausweichen kann und Mittel vorgesehen sind, um die Höhe des Fahrgestells den Laufrädern gegenüber derart zu verstellen, dass die Vorrichtung aus der Betriebslage in die Transportlage gebracht werden kann in welcher die Kufen und die Mähorgane im Abstand vom Boden liegen.

Bei bekannten Mähvorrichtungen dieser Art (FR-A-2408992) ist die Ausführung meistens so, dass nur ein verhältnismässig kleiner Teil des Gewichts der Vorrichtung über die die Mähorgane unterstützenden Kufen auf den Boden übertragen wird, während der grösste Teil des Gewichts von den Laufrädern getragen wird, wobei die Mähorgane federnd ausweichen können.

In einigen Benutzungsfällen, wie z.B. auf sehr unebenem Gelände oder auf einem Gelände auf dem sich verhältnismässig viele Steine im Boden befinden, ist es oft erwünscht, dass man die Mähorgane auf eine höhere Schnitthöhe einstellen kann als die übliche Schnitthöhe. Um diesem Wunsch entgegenzukommen, hat man oft die die Mähorgane unterstützenden Kufen in Höherichtung verstellbar gemacht. Es zeigt sich aber, dass ein wichtiger Nachteil hierbei ist, dass hierdurch ein grösserer Teil des Gewichts der Mähvorrichtung über die Kufen auf den Boden übertragen wird, wodurch die Mähorgane nicht mehr so gut den Unebenheiten im Boden folgen können, und die Kufen anfangen Rillen im Boden zu ziehen. Dadurch geht nun wieder die beabsichtigte Schnitthöhe verloren und es entstehen Beschädigungen am Rasen.

Mit der Erfindung wird bezweckt eine Mähvorrichtung obengenannter Art zu erhalten, wobei die Mähorgane auf einfache Weise in der Höhenrichtung verstellbar sind ohne dass obengenannte Nachteile auftreten.

Erfindungsgemäss wird dies dadurch erreicht, dass die Drehachse des Zugarmes gegenüber dem Fahrgestell um eine sich quer zur Fahrtrichtung erstreckende Schwenkachse einstellbar ist, und daß die Mähorgane mit dem Fahrgestell derart verbunden sind, daß bei der Einstellung des Fahrgestells um die Querachse die Mähorgane um die Berührungspunkte zwischen Kufen und Boden gekippt werden.

Dadurch, dass beim Einstellen des Zugarmes gegenüber dem Fahrgestell das an das Fahrzeug gekoppelte Ende des Zugarmes auf einer festen Höhe gehalten wird, kann beim Drehen des Zugarmes gegenüber dem Fahrgestell ein Kippen der Mähvorrichtung erreicht werden, so dass die in einer Linie angeordneten Mähorgane anfangen, um die Kufenteile welche auf dem Boden ruhen, zu kippen. Hierdurch werden die Drehachsen der Mähorgane mehr zur senkrechten Position bewegt, wodurch der niedrigste Punkt der von den Messern der Mähorgane beschriebenen Bahn höher liegen wird. Diesem Kippen zufolge bleibt der Teil des Gewichts der Mähvorrichtung, welcher durch den federnden Mechanismus auf die Laufräder übertragen wird, gleich gross, oder wird sogar noch vergrössert, wodurch ein sich gut dem Boden Anpassen der Mähorgane gewährleistet wird und die Kufen keinen unerwünscht grossen Teil des Gewichts auf den Boden übertragen.

Bemerkt wird, dass aus US-A-3893283 eine Mähvorrichtung bekannt ist, wobei die Mähvorrichtung von einer Arbeitstellung in eine Transportstellung und umgekehrt bewegbar ist und das Verschwenken des Fahrgestells und des Zugarmes gegenüber einander um eine waagerechte Schwenkachse.

Die Erfindung wird näher erklärt anhand der in den anliegenden Figuren dargestellten Ausführung der Konstruktion gemäss der Erfindung.

Figur 1 zeigt schematisch eine Draufsicht der erfindungsgemässen Mähvorrichtung.

Figur 2 zeigt in grösserem Masstab eine Seitenansicht eines Teils der in Figur 1 dargestellten Vorrichtung.

Figur 3 zeigt eine Draufsicht eines Teils der in Figur 2 dargestellten Vorrichtung.

Figur 4 zeigt eine Seitenansicht eines Teils einer Trommel und der sich darunter befindenden Kufe.

Figur 5 zeigt eine mit Figur 4 übereinstimmende Seitenansicht. einer geänderten Ausführungsbeispiel.

Figur 6 zeigt eine mit Figur 3 übereinstimmend Ansicht einer geänderten Ausführung.

Die in den Figuren wiedergegebenen Mähvorrichtung umfasst ein Gestell 1, welches von zwei Laufrädern 2 unterstützt wird. Die Laufräder sind mit Hilfe der in einer Linie liegenden Achsen 3 frei drehbar an den Enden der Arme 4 befestigt. Die von den Achsen 3 abgewandten Enden der Arme 4 sind an den Enden der Torsionstäbe 5 befestigt, welche in dem hohlen Gestellbalken 6 aufgenommen sind um die an ihren von den Armen 4 abgewandten Enden festgeklemmt sind.

Das Gestell umfasst weiter einen hohlen Gestellbalken 7, welcher mit beiden Enden ein Mähorgan 8 unterstützt, welches Mähorgan mit einer Trommel 9 und mit einer am unteren Ende dieser Trommel befestigten Scheibe 10 versehen ist. An dieser Scheibe 10 sind die Mähmesser 11 in der üblichen Weise gelenkig befestigt.

Darüberhinaus werden die Mähorgane 8 von einem parallel mit dem Balken 7 verlaufenden und unter den Mähorganen befindlichen hohlen, flachen Zahnradkasten 12 unterstützt. Auf diesem Zahnradkasten 12 sind vier weitere zwischen den äusseren Mähorgane 8 gelegen scheibenförmige Mähorgane 13 befestigt, derart, dass sich die Drehachsen dieser Mähorgane 13 parallel an die Drehachsen der Mähorgane 8 erstrecken.

An den Zahnradkasten 12 ist ein Balken 14 befestigt, welcher parallel mit diesem Zahnradkasten verläuft. Eine von einem federstählernen Streifen gebildete Kufe 15 erstreckt sich ferner unter jedes Mähorgan. Der Vorderteil der Kufe 15 steckt in einer Öffnung, welche sich in einer unter den Mähorganen gelegenen Schutzplatte 16 befindet. Ein weiter nach oben durchgebogenen Teil 17 der Kufe 15 ruht gegen den Balken 14, während auf einigem Abstand von diesem durchgebogenen Teil die Kufe 15 mit Hilfe eines nicht näher wiedergegebenen Bolzens an eine hinter den Balken 14 herausragenden plattenförmigen Stütze 18 befestigt ist. Ferner ist die Kufe noch mit einer hinter diese Stütze 18 frei herausragenden Verlängerung versehen.

Eine nähere Umschreibung von Kufen dieser Art wird in der älteren niederländischen Patentanmeldung 8403245 gegeben.

Das Gestell ist ferner mit einem sich nach vorne erstreckenden Balken 19 versehen. An dem Ende dieses Balkens ist eine Stütze 20 befestigt, in der eine Büchse 21 gelagert ist. Die Aussenfläche dieser Büchse bildet ein Teil einer Kugel und ist in einer dementsprechend gebildeten Aussparung in der Stütze 20 aufgenommen, so dass die Büchse einstellbar ist.

Ferner ist an dem Balken 19 eine Platte 24 befestigt. Mit Hilfe eines senkrecht stehenden Scharnierstiftes 25 ist ein Arm 26 schwenkbar an der Platte 24 gekuppelt. In dem Arm 26 ist eine der Büchse 21 entsprechenden Büchse 27 gelagert. In den Büchsen 21 und 27 sind in einer Linie liegenden Stifte 28 und 29 aufgenommen, dessen aus den Büchsen 21 und 27 herausragenden Enden mit dem Ende des Zugarmes 30 verbunden sind. Der Stift 29 wird dabei durch ein Schlitzloch in der Platte 24 geführt.

An dem Ende des Armes 26, welches von der Achse 25 abgewandt ist, ist mit Hilfe eines parallel mit der Achse 25 verlaufenden Stiftes 31 eine Kupplungsglied 32 gelenkig gekoppelt. Die Kupplungsglied 32 ist mit einer Bohrung versehen, in der ein Ende der Stange 33 geschraubt ist. Die Stange 33 ist verschiebbar in einer U-förmigen Stütze 34 geführt, welche an dem Balken 19 befestigt ist.

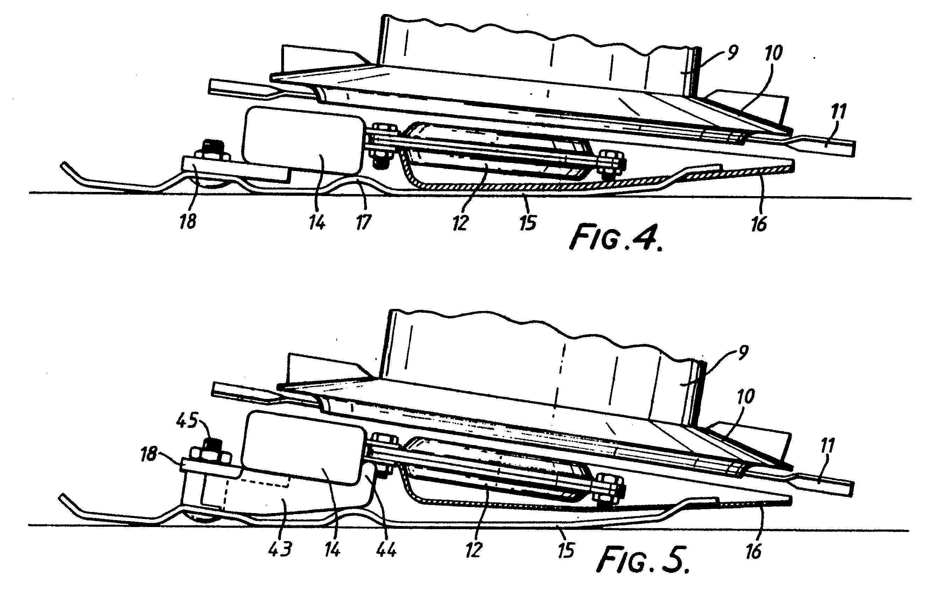

Eine Verschiebbung dieser Stange aus dem in Figur 3 wiedergegebenen Stand nach links wird von einer auf dieser Stange befestigten Mutter 35 verhindert. Die Stange kann mehr oder weniger tief in der Kupplungsglied 32 eingeschraubt werden und sie kann dieser Kupplung gegenüber mit Hilfe einer auf der Stange geschraubten Mutter 36 festgesetzt werden.

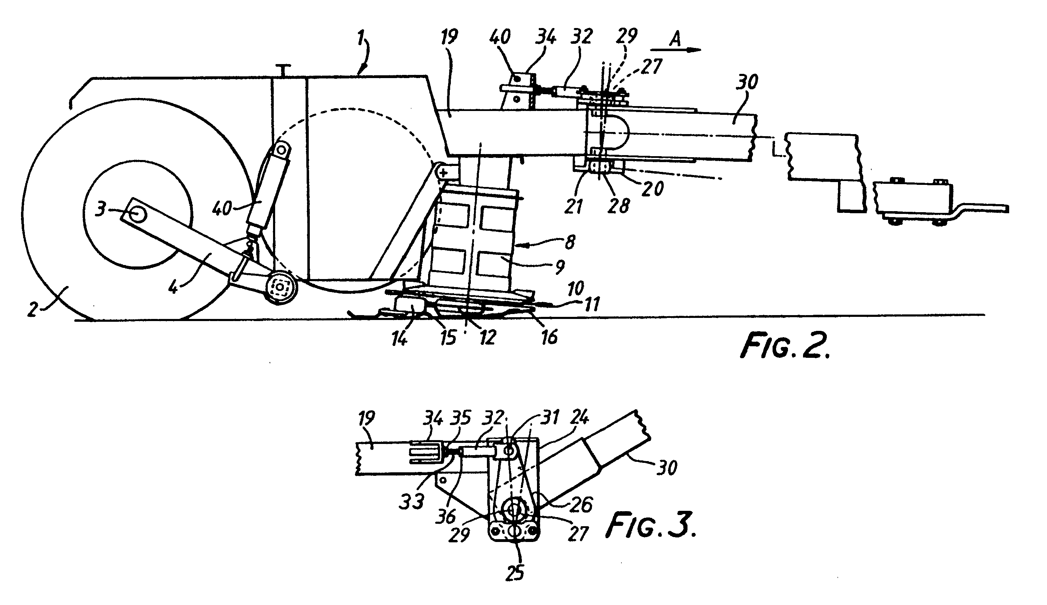

Wie weiter in Figur 2 gezeigt wird, sind zwischen den die Laufräder 2 tragenden Armen 4 und dem Gestell Verstellzylinder 40 befestigt, mit deren Hilfe die Laufräder dem Fahrgestell gegenüber verschwenkt werden können.

Figur 2 zeigt den normale Betriebslage, wobei die Kufen, welche unter den Mähorganen liegen, auf dem Boden ruhen. Dabei ist die Ausführung derart eingerichtet, dass der Grossteil des Gewichtes der Mähvorrichtung über den von Torsionstaben 5 gebildeten federnden Mechanismus auf die Laufräder 2 übertragen wird. Hierdurch werden die Kufen mit verhältnismässig geringem Druck gegen den Boden gedrückt. Demzufolge können die Mähorgane sich gut eventuellen Unebenheiten im Boden anpassen. Dabei schliessen die Drehachsen der Mähorgane 8 und 13 normalerweise einen Winkel von etwa 5° mit der Senkrechten ein.

Bei Gebrauch der Vorrichtung auf unebenem Gelände, oder auf Gelände, wo sich verhältnismässig viele Steine im Boden befinden, kann es erwünscht sein, dass die Messer 11 sich in ihrem niedrigsten Stand höher über dem Boden befinden, als normalerweise während des Mähens üblich ist. Gemäss der Erfindung kann ein einfaches und schnelles Einstellen der Schnitthöhe durch verdrehen des Armes 26 erreicht werden. Wenn nämlich der Arm 26 durch das drehen der Stange 33, in Figure 3 gesehen, sich im Uhrzeigersinn dreht, wird, in Figur 2 gesehen, der oberste mit dem Zugarm 30 verbundene Stift 29 sich bewegen in Pfeilrichtung A, wodurch die Scharnierachse, um der der Zugarm dem Gestell gegenüber drehbar ist, bestrebt ist sich, in Figur 2 gesehen, in Uhrzeigersinn zu drehen. Der Zugarm 30 neigt dann also dazu sich dem übrigen Teil des Fahrgestells gegenüber um eine imaginäre, mehr oder weniger parallel mit den Mähorganen verlaufende Scharnierachse zu verschwenken.

Das vordere Ende des Zugarmes 30 ist aber an einen Schlepper oder dergl. gekuppelt, der die Vorrichtung während im Betrieb fortbewegt, und zwa derart, dass dieses Ende in einer festen Höhe gehalten wird. Demzufolge wird die obengenannte Drehung des Armes 26 bewirken, dass die Ankupplungsstelle des Zugarmes 30 an den Gestellbalken 9 anfängt sich in die Höhe zu bewegen. Dies führt zum Kippen der Mähorgane gegen den Uhrzeigersinn, in Figur 2 gesehen, um die Ende der Kufen, welche hinter die Mähorgane herausragen, derart, dass der Winkel zwischen den Drehachsen der Mähorgane und der Senkrechten ein wenig abnimmt. Demzufolge werden die Messer in ihrem niedrigsten Stand höher über den Boden liegen. Bei diesem Kippen wird der über die Torsionfederns auf die Räder 2 übertragene Gewichtsteil der Mähvorrichtung gleich bleiben, oder eventuell ein wenig zunehmen, so dass die auf die Kufen 15 übertragene Belastung nicht zunimmt, und die gute Bodenanpassungfähigkeit der Mähorgane gewährt bleibt. Beim Zurückdrehen des Armes 26 mit Hilfe der Schraubstange 33 wegt die Mähvorrichtung wieder zurück in den in Figur 2 wiedergegebenen Stand.

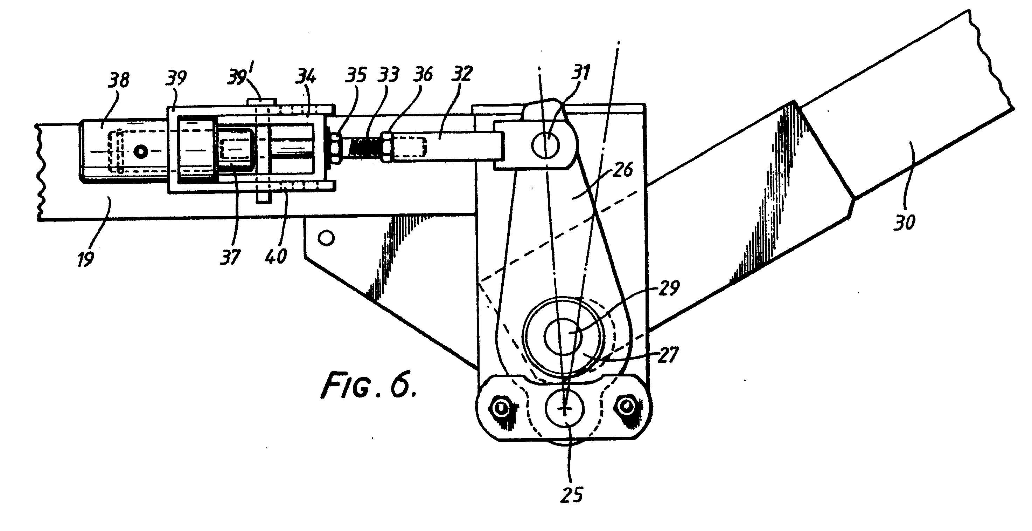

In dem in Figur 6 wiedergegebenen Ausführungsbeispiel ist das von dem Hebel 26 abgewandte Ende der Stange 33 mit einem Plunger 37 eines Verstellzylinders 38 verbunden. Dieser Verstellzylinder 38 ist an einer U-förmigen Stütze 39 befestigt, welche mit Hilfe von zwei Stiften, die in Löcher, welche in den Stützen 34 und 39 bebohrt sind, geführt sind, an der Stütze 34 befestigt ist. Wenn gesehen in der Längsrichtung des Verstellzylinders, sind mehrere hintereinander liegende Löcher 40 in die Stütze gebohrt, so dass die Stütze 39 in mehreren Positionen an die Stütze 34 befestigt werden kann.

Dadurch, dass der Arm 26 mit Hilfe eines hydraulischen Verstellzylinders drehbar ist, welcher fernbedient werden kann von einem die Mähvorrichtung fortbewegenden Schlepper oder dergl. aus, kann die Einstellung der Mähhöhe durch den Schlepper-fahrer während des Inbetriebseins geschehen, so dass immer für alle Arbeiten eine optimale Einstellung der Mähhöhe möglich ist. Dies kann zum Beispiel von Nutzen sein beim Mähen von plattgeschlagenem Erntegut, wobei es erwünscht ist eine andere Schnitthöhe einzustellen, wenn man mit der Richtung in der das Erntegut plattgeschlagen ist mit mäht, gegenüber wenn man in der entgegengesetzten Richtung mäht.

Dadurch, dass die Stütze 39 in mehreren Positionen an der Stütze befestigt werden kann, ist es möglich durch Gebrauch eines einfachen Verstellzylinders 38, welcher für die beabsichtigte Verstellung immer die ganze Hub ausführt, trotzdem auf einfache Weise mehrere Einstellmöglichkeiten zu bekommen.

Die oben beschriebene Maschine ist unter Erhaltung aller obengenannten Möglichkeiten einfach umzuwandeln in eine Mähvorrichtung bei der die Drehachsen der Mähorgane mit der Senkrechten andere Winkel einschliessen. Dazu braucht nur, wie in Figur 5 wiedergeben ist, ein Füllstück 43 zwischen jeder Kufe 15 und dem Balken 14 montiert zu werden.

Der Füllstück 43 greift mit seiner Spitze um den Balken 14, während jede Stütze 18 in jedem betreffenden Füllstück gemachten Aussparung teilweise aufgenommen ist. Die Füllstücke 43 und die Kufen 15 sind mit Bolzen 45 an den Stützen 18 befestigt.

Wie weiter noch aus den Figuren 2, 3 und 5 hervorgeht, ragen die hinteren Enden der aus Federstahl angefertigten Kufen frei heraus, vorbei an die Befestigungspunkte der Kufen 15 an die Stützen 18. Diese herausragenden und federnden Enden fangen die Stösse beim auf die Erde prallen der Mähorgane auf, wenn diese aufgesprungen sind, was wiederum einen günstigen Einfluss auf die Lebensdauer der Mähvorrichtung hat.

Natürlich sind, innerhalb des Wesens und des Schutzumfanges der Erfindung, Änderungen und/oder Erweiterungen auf der obenbeschriebenen Ausführung möglich. So ist es zum Beispiel möglich, dass der Zugarm 30 mit einer waagerechten, parallel mit den Mähorganen verlaufenden Achse gelenkig an das Fahrgestell gekoppelt ist, wobei dann Mittel montiert sind, mit deren Hilfe der Zugarm um diese Achse dem Gestell gegenüber drehbar sein wird.

Beim Transport kann die Mähvorrichtung aufgehoben werden durch drehen der Arme 4 dem Gestell gegenüber, mit Hilfe der Verstellzylinder 40.

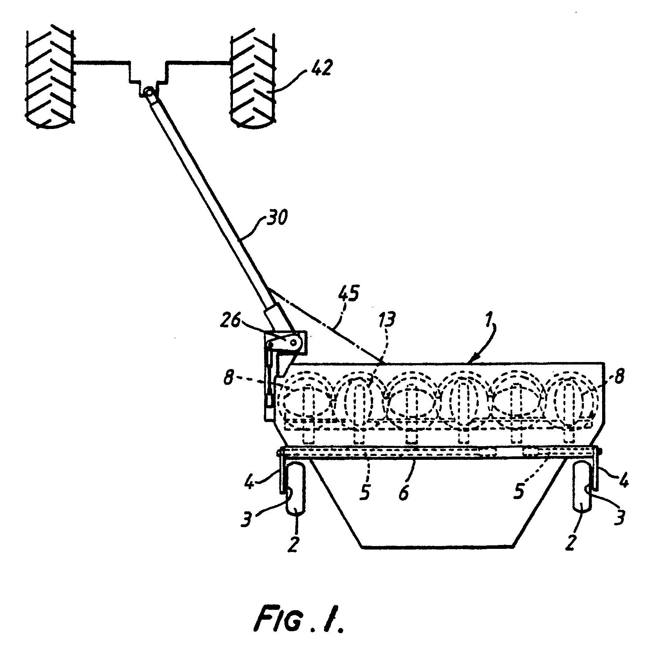

Der Zugarm 30 kann dabei mit Hilfe eines nur schematisch in Figur 1 angedeuteten Verstellzylinders 45 um die von den Achszapfen 28 und 29 gebildeten Drehachse gedreht werden, derart, dass die Mähvorrichtung sich genau hinter den Trecker befinden wird.

**Ansprüche**

1. Mähvorrichtuug, mit einem Laufräder (2) aufweisenden Fahrgestell (1), welches mit Hilfe eines Zugarmes (3), der dem Fahrgestell gegenüber um eine sich aufwärts erstreckende Drehachse (28,29) drehbar ist, an ein Fahrzeug (42) gekuppelt werden kann, und mit mehreren mit Messern (11) versehenen Mähorganen (8), welche quer zur Fahrtrichtung nebeneinander angeordnet sind und um sich aufwärts erstreckende Drehachsen drehbar sind, und welche in Betrieb wenigstens teilweise von mindestens zwei in der Nähe der äusseren Mähorgane (8) angeordneten Kufen (15) unterstützt werden, die hinter den in Fahrtrichtung vordersten Stellen der von den Messern (11) der Mähorgane (8) beschriebenen Umfangskreise den Boden berühren, während der Teil des Fahrgestells, welcher die Mähorgane (8) unterstützt, den Laufrädern (2) gegenüber federnd ausweichen kann, und Mittel vorgesehen sind, um die Höhe des Fahrgestells den Laufrädern gegenüber derart zu verstellen, dass die Vorrichtung aus der Betriebslage in die Transportlage gebracht werden kann in welcher die Kufen und die Mähorgane im Abstand vom Boden liegen, dadurch gekennzeichnet, dass die Drehachse (28,29) des Zugarmes (30) dem Fahrgestell (1) gegenüber um eine sich quer zur Fahrtrichtung erstreckende Schwenkachse einstellbar ist, und daß die Mähorgane mit dem Fahrgestell derart verbunden sind, daß bei der Einstellung des Fahrgestells um die Querachse die Mähorgane um die Berührungspunkte zwischen Kufen (15) und Boden gekippt werden.

2. Mähvorrichtung nach Anspruch 1, dadurch gekennzeichnet, dass die Kufen (15), quer zur Fahrtrichtung gesehen, hinter den Drehachsen der Mähorgane (8) mit dem Boden in Berührung kommen.

3. Mähvorrichtung nach den Ansprüchen 1 oder 2, dadurch gekennzeichnet, dass die Kufen (15) von federstählernen Streifen gebildet werden, und dass diese mit hinter den hintersten Befestigungspunkten(45) der Kuren frei herausragenden Teilen versehen sind.

4. Mähvorrichtung nach einem der vorhergehenden Ansprüche, dadurch gekennzeichnet, dass unter jedem Mähorgan (8) eine Kufe (15) angeordnet ist.

5. Mähvorrichtung nach einem der vorhergehenden Ansprüche, dadurch gekennzeichnet, dass der Zugarm (30) versehen ist mit über bzw. unter dem Zugarm herausragenden Achszapfen (28,29), welche in in jeder Richtung verdrehbar unterstützten Buchsen (21,27) gelagert sind, wobei Jedenfalls eine Buchse (27) in einem verstellbar mit dem Gestell verbundenen Teil (26) gelagert ist.

6. Mähvorrichtung nach Anspruch 5, dadurch gekennzeichnet, dass der verstellbare Teil von einem Arm (26) gebildet wird, der dem Gestell (1) gegenüber um eine in einigem Abstand der im Arm gelagerten Buchse (27) aufgestellten, sich aufwärts erstreckenden Schwenkachse (25) drehbar ist.

7. Mähvorrichtung nach Anspruch 6, dadurch gekennzeichnet, dass der Arm (26) an eine Schraubspindel (33), mit deren Hilfe der Arm (26) drehbar und in mehreren Positionen einstellbar ist, gekuppelt ist.

8. Mähvorrichtung nach Anspruch 7, dadurch gekennzeichnet, dass der Arm (26) an einen fernbedienbaren Verstellzylinder (38) gekuppelt ist.

9. Mähvorrichtung nach Anspruch 8, dadurch gekennzeichnet, dass der Verstellzylinder (38) dem Gestell (1) der Mähvorrichtung gegenüber in einer Richtung, welche parallel mit seiner Längsrichtung verläuft, einstellbar ist und dass er dem Gestell (1) gegenüber in mehreren Positionen festgesetzt werden kann.

## Claims

1. Mowing apparatus, with a chassis (1) which has running wheels (2) and which, with the aid of a towing arm (3) which can be rotated in relation to the chassis about a rotational axis (28, 29) which extends upwards, can be coupled to a vehicle (42) and with several bladed (11) mowing units (8), which are arranged next to one another at right angles to the direction of travel and which can be rotated about upwardly extending rotational axes, and which during use are at least partially supported by a minimum of two runners (15) in the proximity of the outer mowing units (8), which touch the ground behind the foremost points of the circumference described by the blades (11) of the mowing units (8), whilst the part of the chassis which supports the mowing units (8) can deflect resiliently with respect to the running wheels (2), and means are provided to adjust the height of the chassis in relation to the running wheels, in such a way that the apparatus can be moved from the operational state to the transport state, in which the runners and the mowing units are distanced from the ground, characterized in that the rotational axis (28, 29) of the towing arm (30) is adjustable in relation to the chassis (1) about a swivelling axis extending transverse to the direction of travel, and in that the mowing units are connected to the chassis in such a way that when the chassis is adjusted about the transverse axis, the mowing units are tilted about the points of contact between the runners (15) and the ground.

2. Mowing apparatus according to Claim 1, characterized in that viewed transverse to the direction of travel the runners (15) come in to contact with the ground behind the rotational axes of the mowing units (8).

3. Mowing apparatus according to Claims 1 or 2, characterized in that the runners (15) are formed from spring steel strips and that these are provided with freely projecting parts behind the rearmost fastening points (45) of the runners.

4. Mowing apparatus according to one of the foregoing claims, characterized in that a runner (15) is situated under each mowing unit (8).

5. Mowing apparatus according to one of the foregoing claims, characterized in that the towing arm (30) has been provided with axle journals (28, 29) projecting above or beneath the towing arm, which are mounted on bushes (21, 27) which are supported to be rotatable in any direction, whereby in any case one bush (27) is mounted in a part (26) movably connected to the chassis.

6. Mowing apparatus according to Claim 5, characterized in that the movable part is constituted by an arm (26), which in relation to the chassis (1) is rotatable about an upwardly extending swivelling axis which is a certain distance from the bush (27) mounted in the arm.

7. Mowing apparatus according to claim 6, characterized in that the arm (26) is coupled to a threaded spindle (33), with the aid of which the arm (26) can be rotated and set in a plurality of positions.

8. Mowing apparatus according to claim 7, characterized in that the arm (26) is connected to a remotely controllable displacement cylinder (38).

9. Mowing apparatus according to claim 9, characterized in that in relation to the chassis (1) of the mowing apparatus the displacement cylinder (38) is adjustable in a direction which runs parallel with its longitudinal direction, and in that in relation to the chassis (1) it can be fixed in a plurality of positions.

**Revendications**

1. Dispositif de fauchage comportant un châssis (1) présentant des roues mobiles (2), attelable à un véhicule (42) grâce à un bras de traction mobile par rapport au châssis autour d'un axe (28, 29) dirigé vers le haut, er plusieurs organes de fauchage (8) munis de couteaux (11), disposés côte à côte perpendiculairement au sens du déplacement, mobiles autour d'axes dirigés vers le haut et supportés durant le fonctionnement, du moins partiellement, par au moins deux patins (15) disposés à proximité des organes de fauchage extérieurs (8) qui touchent le sol derrière les points les plus en avant dans le sens du déplacement des circonférences décrites par les couteaux (11) des organes de fauchage (8), pendant que la partie du châssis supportant les organes de fauchage (8) peut éviter élastiquement les roues (2) et que des moyens sont prévus pour ajuster la hauteur du châssis par rapport aux roues de façon à permettre d'amener le dispositif de la position de fonctionnement à la position de déplacement dans laquelle les patins et les organes de fauchage sont à distance du sol, caractérisé en ce que l'axe (28, 29) du bras de traction (30) est mobile par rapport au châssis (1) autour d'un axe de pivotement transversal au sens du déplacement et que les organes de fauchage sont reliés au châssis de telle sorte que lors du positionnement du châssis autour de l'axe transversal les organes de fauchage basculent autour des points de contact entre les patins (15) et le sol.

2. Dispositif de fauchage selon la revendication 1, caractérisé en ce que les patins (15), considérés perpendiculairement au sens du déplacement, entrent en contact avec le sol derrière les axes de rotation des organes de fauchage (8).

3. Dispositif de fauchage selon les revendications 1 ou 2, caractérisé en ce que les patins (15) sont formés de bandes en acier à ressorts et que celles-ci sont munies de parties dépassant librement derrière les points de fixation les plus en arrière (45) des patins.

4. Dispositif de fauchage selon l'une quelconque des revendications précédentes, caractérisé en ce qu'un patin (15) est disposé sous chaque organe de fauchage (8).

5. Dispositif de fauchage selon l'une quelconque des revendications précédentes, caractérisé en ce que le bras de traction (30) comporte des tourillons (28, 29) dépassant au-dessus ou en dessous du bras de traction et logés des coussinets (21, 27) soutenus de façon à pouvoir tourner dans toutes les directions, un coussinet (27) au moins étant logé dans une pièce (26) reliée de façon réglable au châssis.

6. Dispositif de faucage selon la revendication 5, caractérisé en ce que la pièce réglable est formée par un bras (26) mobile par rapport au châssis (1) autour d'un axe de pivotement dirigé vers le haut, situé à quelque distance du coussinet (27) logé dans le bras.

7. Dispositif de fauchage selon la revendication 6, caractérisé en ce que le bras (26) est relié à une broche filetée (33) grâce à laquelle le bras (26) est pivotable et réglable en plusieurs positions.

8. Dispositif de fauchage selon la revendication 7, caracterisé en ce que le bras (26) est relié à un vérin d'ajustage (38) commandable à distance.

9. Dispositif de fauchage selon la revendication 8, caractérisé en ce que le vérin d'ajustage (38) est ajustable par rapport au châssis (1) du dispositif de fauchage dans une direction parallèle à son sens longitudinal et peut être fixé en plusieurs positions par rapport au châssis (1).

**FIG . 1.**

*FIG. 2.*

*FIG. 3.*

FIG.4.

FIG.5.

EP 0 223 302 B1

FIG. 6.